(19) Europäisches Patentamt
European Patent Office
Office européen des brevets

(11) **EP 2 205 858 B1**

(12) **FASCICULE DE BREVET EUROPEEN**

(45) Date de publication et mention de la délivrance du brevet:
**01.02.2017 Bulletin 2017/05**

(21) Numéro de dépôt: **08848465.4**

(22) Date de dépôt: **01.10.2008**

(51) Int Cl.:
*F02P 17/12* *(2006.01)*      *F02P 23/04* *(2006.01)*

(86) Numéro de dépôt international:
**PCT/FR2008/051776**

(87) Numéro de publication internationale:
**WO 2009/060149 (14.05.2009 Gazette 2009/20)**

(54) **DISPOSITIF DE MESURE DU COURANT D'IONISATION DANS UN SYSTEME D'ALLUMAGE RADIOFREQUENCE POUR UN MOTEUR A COMBUSTION INTERNE**

VORRICHTUNG ZUR MESSUNG DES IONISATIONSSTROMES IN EINEM RADIOFREQUENZ-ZÜNDSYSTEM FÜR EINEN BRENNKRAFTMOTOR

DEVICE FOR MEASURING THE IONIZATION CURRENT IN A RADIOFREQUENCY IGNITION SYSTEM FOR AN INTERNAL COMBUSTION ENGINE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **05.11.2007 FR 0758795**

(43) Date de publication de la demande:
**14.07.2010 Bulletin 2010/28**

(73) Titulaire: **Renault S.A.S.**
**92100 Boulogne-Billancourt (FR)**

(72) Inventeurs:
• **AGNERAY, André**
  **F-92100 Boulogne Billancourt (FR)**
• **DELORAINE, Franck**
  **F-92260 Fontenay aux Roses (FR)**

(56) Documents cités:
**EP-A- 0 825 343      WO-A-97/28366**
**WO-A-2007/113407   DE-A1- 19 852 652**
**DE-A1- 19 912 376   FR-A- 2 895 169**

**Description**

La présente invention concerne un dispositif de mesure dans un système d'allumage radiofréquence commandé électroniquement d'un moteur à combustion interne, adapté à réaliser la mesure du courant d'ionisation des gaz dans les cylindres du moteur lors de la combustion.

La mesure du courant d'ionisation des gaz dans les cylindres du moteur s'effectue typiquement après la fin de l'allumage et trouve des applications particulièrement avantageuses, par exemple pour la détection de l'angle vilebrequin correspondant au pic de pression de la chambre de combustion, du cliquetis ou encore pour l'identification des ratés d'allumage.

Il est connu des circuits de mesure du courant d'ionisation pour un système d'allumage classique, dont le fonctionnement consiste à polariser le mélange de la chambre à combustion après la génération de l'étincelle entre les électrodes de la bougie d'allumage, afin de mesurer le courant résultant de la propagation de l'étincelle.

De tels circuits sont classiquement disposés au pied du secondaire d'une bobine d'allumage connectée à la bougie d'allumage.

Ces circuits nécessitent cependant d'être dédiés aux caractéristiques de l'allumage classique et ne sont donc pas adaptables en tant que tels aux systèmes d'allumage à génération de plasma, mettant en oeuvre des bougies d'allumage de type bobines-bougies radiofréquence, comme décrits en détail dans les demandes de brevet suivantes déposées au nom de la demanderesse FR 03-10766, FR 03-10767 et FR 03-10768.

Les spécificités de l'allumage radiofréquence engendrent plusieurs contraintes pour mesurer le courant d'ionisation. En effet, la mesure du courant d'ionisation s'effectue après la fin de l'allumage. Son amplitude dépend de la tension continue ou « tension de polarisation » appliquée entre l'électrode haute-tension de la bougie et la masse moteur. La tension de polarisation est typiquement comprise entre la tension batterie et plusieurs centaines de volts. L'expérience montre que le signal représentatif du courant d'ionisation a une amplitude comprise entre 0,1 µA et 1 mA selon les conditions de la chambre de combustion (température, pression, composition du mélange...). Or, le signal de commande d'allumage induit des courants importants qui ont un écart d'amplitude de près de 120 dB avec le courant d'ionisation que l'on cherche à mesurer. Le circuit de mesure subit donc un temps d'éblouissement pendant lequel il ne peut effectuer l'acquisition d'un faible courant.

En outre, ce type d'allumage permet de développer 2 types de décharge (une étincelle multi-filamentaires ou un arc mono-filamentaire), qui ont une influence différente sur le système de mesure. Il existe donc une difficulté à garantir une indépendance de la mesure du courant d'ionisation par rapport au type de décharge généré.

La présente invention vise donc à résoudre au moins en partie ces inconvénients en proposant un dispositif de mesure du courant d'ionisation adapté à un système d'allumage radiofréquence.

Avec cet objectif en vue l'invention concerne donc un dispositif d'allumage radiofréquence d'un moteur à combustion interne, caractérisé en ce qu'il comprend :

- un circuit d'alimentation, comprenant un transformateur dont un enroulement secondaire est connecté à au moins un résonateur présentant une fréquence de résonance supérieure à 1 MHz et comprenant deux électrodes aptes à générer une étincelle pour initier la combustion dans un cylindre du moteur lors d'une commande d'allumage,

- un condensateur de mesure, connecté en série entre l'enroulement secondaire du transformateur et le résonateur, et

- un circuit de mesure du courant d'ionisation des gaz en combustion dans le cylindre, connecté audit condensateur de mesure, ledit circuit de mesure comprenant un générateur de tension à faible impédance d'entrée, apte à fournir une tension de polarisation du condensateur de mesure pour générer le courant d'ionisation, des premiers moyens d'amplification du courant d'ionisation et des moyens de mesure d'une tension représentative du courant d'ionisation amplifié, connectés en sortie des premiers moyens d'amplification.

Avantageusement, le condensateur de mesure est connecté en série entre l'enroulement secondaire du transformateur et le résonateur, au niveau d'un fil de retour à la masse du transformateur et du résonateur.

Selon un mode de réalisation, le circuit de mesure comprend un transistor monté en base commune, dont une première électrode est connectée à une borne du condensateur de mesure et dont une deuxième électrode est connectée à la tension de polarisation par l'intermédiaire des premiers moyens d'amplification.

Selon encore un mode de réalisation, la première électrode du transistor monté en base commune est connectée en outre à une résistance d'entrée du circuit de mesure.

Avantageusement, les moyens de mesure de la tension représentative du courant d'ionisation amplifié sont connectés en outre à la résistance d'entrée par l'intermédiaire de seconds moyens d'amplification, aptes à amplifier le courant circulant dans la résistance d'entrée et présentant un gain d'amplification identique aux premiers moyens d'amplification.

Selon un mode de réalisation, les moyens d'amplification comprennent un miroir de courant.

Selon un mode de réalisation, les moyens de mesure de la tension représentative du courant d'ionisation amplifié comprennent une résistance de mesure.

Selon encore un mode de réalisation, un enroulement primaire du transformateur est connecté d'un côté à une tension d'alimentation et de l'autre côté au drain d'au moins un transistor interrupteur commandé par un signal de commande, le transistor interrupteur appliquant la tension d'alimentation aux bornes de l'enroulement primaire à une fréquence définie par le signal de commande.

De préférence, le transformateur comprend un rapport de transformation variable.

D'autres caractéristiques et avantages de la présente invention apparaîtront plus clairement à la lecture de la description suivante donnée à titre d'exemple illustratif et non limitatif et faite en référence aux figures annexées dans lesquelles :

- la figure 1 est un schéma d'un résonateur modélisant une bobine-bougie radiofréquence de génération de plasma,
- la figure 2 est un schéma illustrant un circuit d'alimentation selon l'état de la technique, permettant d'appliquer une tension alternative dans la gamme des radiofréquences aux bornes de la bobine bougie modélisée à la figure 1,
- la figure 3 est un schéma illustrant une variante du circuit de la figure 2,
- la figure 4 est un schéma illustrant un circuit d'alimentation adapté selon l'invention à la mesure du courant d'ionisation, et
- la figure 5 illustre un mode de réalisation du circuit de mesure du courant d'ionisation.

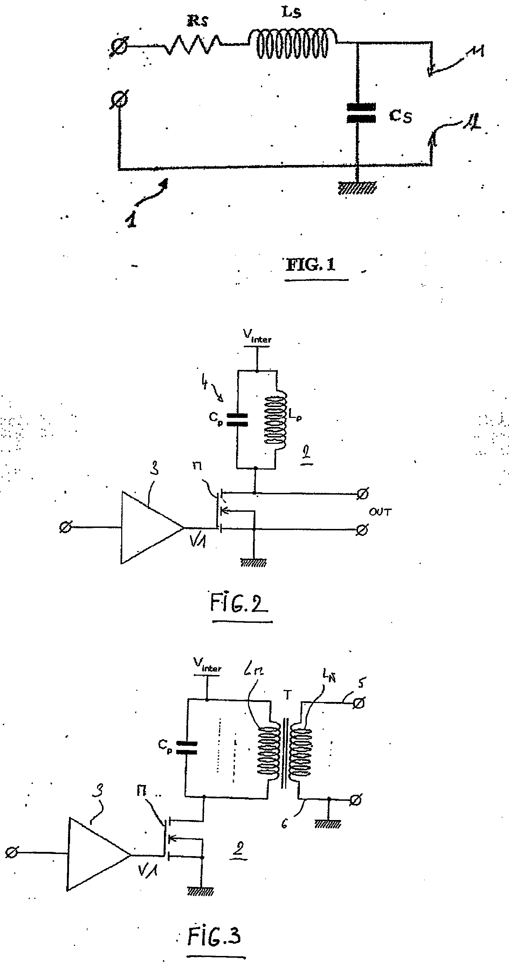

La bobine-bougie mise en oeuvre dans le cadre de l'allumage radiofréquence commandé est équivalente électriquement à un résonateur 1 (voir figure 1), dont la fréquence de résonance $F_c$ est supérieure à 1 MHz, et typiquement voisine de 5 MHz. Le résonateur comprend en série une résistance Rs, une bobine d'inductance Ls et une capacité notée Cs. Des électrodes d'allumage 11 et 12 de la bobine-bougie sont connectées aux bornes de la capacité Cs du résonateur, permettant de générer des décharges multi-filamentaires pour initier la combustion du mélange dans les chambres de combustion du moteur, lorsque le résonateur est alimenté à sa fréquence de résonance.

En effet, lorsque le résonateur est alimenté par une haute tension à sa fréquence de résonance $F_c$

$$(1/(2\pi\sqrt{Ls*Cs}))\,,$$ l'amplitude aux bornes de la capacité Cs est amplifiée de telle sorte que des décharges multifilamentaires se développent entre les électrodes, sur des distances de l'ordre du centimètre, à forte pression et pour des tensions de crête inférieures à 20 kV.

On parle alors d'étincelles ramifiées, dans la mesure où elles impliquent la génération simultanée d'au moins plusieurs lignes ou chemin d'ionisation dans un volume donné, leurs ramifications étant en outre omnidirectionnelles.

Cette application à l'allumage radiofréquence nécessite alors l'utilisation d'un circuit d'alimentation, capable de générer des impulsions de tension, typiquement de l'ordre de 100 ns, pouvant atteindre des amplitudes de l'ordre de 1 kV, à une fréquence très proche de la fréquence de résonance du résonateur de génération de plasma de la bobine-bougie radiofréquence.

La figure 2 illustre schématiquement un tel circuit d'alimentation 2, détaillée par ailleurs dans la demande de brevet FR 03-10767. Le circuit d'alimentation de la bobine-bougie radiofréquence met classiquement en oeuvre un montage dit « amplificateur de puissance pseudo Classe E ». Ce montage permet de créer les impulsions de tension avec les caractéristiques précitées.

Ce montage se compose d'une alimentation continue intermédiaire Vinter pouvant varier de 0 à 250V, d'un transistor MOSFET de puissance M et d'un circuit résonant parallèle 4, comprenant une bobine Lp en parallèle avec un condensateur Cp, de fréquence de résonance voisine de 5 MHz également. Le transistor M est utilisé comme interrupteur pour commander les commutations aux bornes du circuit résonant parallèle et du résonateur 1 de génération de plasma destiné à être connecté sur une interface de sortie OUT du circuit d'alimentation.

Le transistor M est piloté sur sa grille par un signal logique de commande V1, fourni par un étage de commande 3, à une fréquence qui doit être sensiblement calée sur la fréquence de résonance du résonateur 1.

La tension d'alimentation continue intermédiaire Vinter, pouvant varier entre 0 et 250 V, peut avantageusement être fournie par une alimentation haute tension, typiquement un convertisseur DC/DC.

Ainsi, à proximité de sa fréquence de résonance, le résonateur parallèle 4 transforme la tension d'alimentation continue Vinter en une tension périodique amplifiée, correspondant à la tension d'alimentation multipliée par le coefficient de surtension du résonateur parallèle et appliquée sur une interface de sortie du circuit d'alimentation au niveau du drain du transistor interrupteur M.

Le transistor interrupteur M applique alors la tension d'alimentation amplifiée sur la sortie de l'alimentation, à la fréquence définie par le signal de commande V1, que l'on cherche à rendre la plus proche possible de la fréquence de résonance de la bobine-bougie, de manière à générer la haute-tension aux bornes des électrodes de la bobine-bougie nécessaire au développement et à l'entretien de la décharge multifilamentaire.

Le transistor commute ainsi de forts courants ($I_{crête} \approx 20A$) à une fréquence de 5 MHZ environ, et avec une tension drain-source pouvant atteindre 1kV. Le choix du transistor est donc critique et nécessite un compromis entre tension et courant.

Aussi, selon la mode de réalisation illustrée à la figure 3, on propose de remplacer la bobine parallèle Lp par un transformateur T, présentant un rapport de transformation variable, par exemple compris entre 1 et 5, et d'adapter le rapport de transformation de manière à réduire la tension drain-source du transistor interrupteur M. L'enroulement frimaire $L_M$ du transformateur est relié, d'un côté à la tension d'alimentation Vinter et de l'autre côté, au drain du transistor interrupteur M, commandant l'application de la tension d'alimentation Vinter aux bornes de l'enroulement primaire à la fréquence définie par le signal de commande V1.

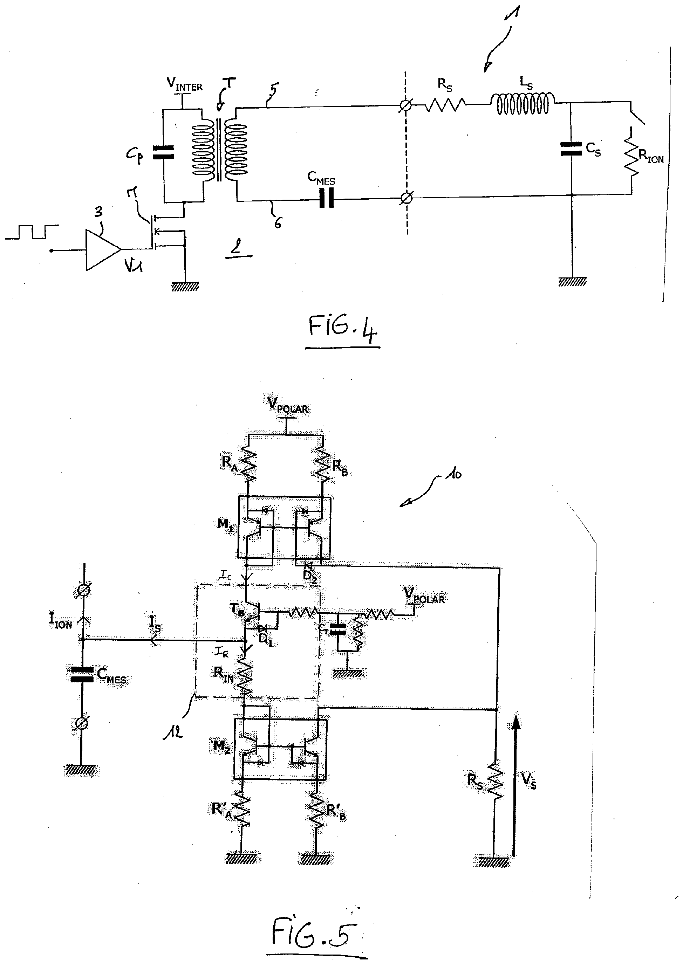

L'enroulement secondaire $L_N$ du transformateur, dont un côté est relié à la masse par un fil de retour à la masse 6, est quant à lui prévu pour être connecté à la bobine-bougie. De cette manière, le résonateur 1 de la bobine-bougie, connectée aux bornes de l'enroulement secondaire par des fils de liaison 5 et 6, dont le fil de retour à la masse 6, est donc alimenté par le secondaire du transformateur, comme illustré à la figure 4.

L'adaptation du rapport de transformation permet alors de réduire la tension drain-source du transistor. La diminution de la tension au primaire induit cependant une augmentation du courant traversant le transistor. Il est alors possible de compenser cette contrainte en plaçant par exemple deux transistors en parallèle commandés par le même étage de commande 3.

Lors de l'allumage, il est indispensable que l'étincelle ramifiée se développe en volume afin de garantir une combustion et un fonctionnement du moteur optimal. La réalisation de la mesure du courant d'ionisation nécessite donc d'utiliser un composant qui ne dégrade pas le rendement énergétique de l'allumage.

La solution retenue à cet effet consiste à connecter un condensateur de mesure $C_{MES}$ en série entre l'enroulement secondaire du transformateur T et le résonateur 1, sur le fil de retour à la masse 6. Le condensateur de mesure est ainsi avantageusement placé dans le circuit à un endroit où les différences de potentiel par rapport à la masse sont le plus faibles possibles.

Un condensateur de capacité réduite, typiquement une dizaine de nanofarad, permet de ne pas perturber le système d'allumage tout en ayant la possibilité d'effectuer des mesures basse fréquence du courant d'ionisation.

Ainsi, l'intérêt principal du choix de ce composant de mesure par rapport à d'autres composants passifs réside dans son comportement en radiofréquence. En effet, en hautes fréquences, l'homme de l'art sait que le circuit équivalent haute fréquence d'un condensateur est constitué par un résonateur série. Or, un résonateur a une impédance qui évolue selon la fréquence du signal appliqué à son entrée, et est minimale à la fréquence de résonance du résonateur. Cette caractéristique de l'évolution de l'impédance d'un résonateur en fonction de la fréquence permet alors au condensateur de présenter une très faible impédance au voisinage de la fréquence de résonance de l'allumage et une impédance élevée dans la bande de fréquences utilisée pour le signal d'ionisation ($F_{ION}$<15kHz). Le condensateur de mesure est donc judicieusement choisi de manière à présenter sa plus faible impédance dans la plage de fréquences utilisées pour le signal de commande d'allumage. Cela permet de minimiser la tension aux bornes du condensateur de mesure pour protéger le circuit de mesure, qui va maintenant être décrit en référence à la figure 5.

Des informations utiles sur la combustion sont extractibles du signal ionique tôt après la fin de l'allumage. La combustion durant en moyenne 40° vilebrequin, on tolère que l'information soit masquée au maximum 200µs après la fin de l'étincelle (soit environ 8° vilebrequin pour un régime moteur de 6500 trs/min). Il faut alors prévoir un circuit de mesure apte à être disponible très rapidement pour effectuer la mesure. Le circuit de mesure étant saturé pendant toute la phase d'allumage, du fait des courants importants induits par le signal de commande d'allumage, il est donc nécessaire que le temps de désaturation du circuit soit au maximum de 200µs afin de pouvoir faire l'acquisition du signal de mesure en mode linéaire.

Aussi, le circuit de mesure 10, connecté aux bornes du condensateur de mesure $C_{MES}$, comme illustré à la figure 5, comprend avantageusement un générateur de tension à faible impédance d'entrée, typiquement de l'ordre de la dizaine d'Ohms, de manière à réduire le temps d'éblouissement du circuit de mesure, et apte à fournir une tension de polarisation continue $V_{POLAR}$ pour charger le condensateur de mesure $C_{MES}$. La tension $V_{POLAR}$, peut par exemple être comprise entre 12 et 250V

Ainsi, la faible impédance d'entrée du générateur permet de maintenir la tension constante aux bornes du condensateur et/ou de ramener rapidement sa tension à $V_{POLAR}$ après l'étincelle. Cette impédance est suffisamment faible pour que le courant $I_{ION}$ représentatif de l'évolution de la combustion des gaz dans la chambre de combustion soit fourni par le transistor $T_B$, dont le fonctionnement va être décrit plus en détail ci-après, et non par le condensateur $C_{MES}$. C'est ce courant de décharge $I_{ION}$ que l'on cherche à mesurer via le circuit de mesure 10 de la figure 5.

Ainsi, la tension de polarisation $V_{POLAR}$ est appliqué au circuit via un étage de polarisation 12, comprenant un transistor bipolaire $T_B$ monté en base commune avec une sortie sur l'émetteur du transistor, connecté à une borne du condensateur de mesure $C_{MES}$. Le montage du transistor $T_B$ en base commune se caractérise notamment par son impédance d'entrée faible, permettant avantageusement de procurer la réactivité souhaitée au circuit de mesure.

Par exemple, en connectant ce montage sur le condensateur de mesure, on obtient une impédance d'entrée $Z_E$ équivalente à :

$$Z_E = R_{IN} / \left( \frac{r_{be}}{\beta + 1} \right)$$

Où : $R_{IN}$ est la résistance placée en entrée du circuit de mesure,

$R_{be}$ indique la résistance intrinsèque du transistor TB, et

β correspond au gain du transistor TB.

Typiquement, en choisissant : $R_{IN}$ = 8kΩ, $R_{be}$ = 1kΩ et β = 100, on obtient $Z_E \approx 10Ω$.

Le courant de sortie $I_S$ du montage 12, représentatif du courant d'ionisation $I_{ION}$, est mesuré par l'intermédiaire de la résistance de sortie $R_S$ du circuit de mesure, qui, comme on le verra plus en détail par la suite, est en effet traversée par un courant lui conférant une tension $V_S$ à ses bornes, dont la mesure fournira alors une image en tension du courant d'ionisation.

Ce courant $I_S$ est sensiblement égal à la différence de courant entre le courant $I_C$ entrant dans le transistor $T_B$ et le courant $I_P$ circulant dans la résistance d'entrée du circuit $R_{IN}$.

Or, l'amplitude du courant d'ionisation que l'on cherche à mesurer étant faible et majoritairement inférieure à 1mA, le circuit de mesure comprend avantageusement des moyens d'amplification en courant. A cette fin, le circuit de mesure comprend un premier miroir de courant $M_1$, connecté entre la source de tension de polarisation $V_{POLAR}$ et l'entrée du transistor $T_B$, et présentant un gain d'amplification $G_m=R_A/R_B$, défini par les valeurs des résistances $R_A$ et $R_B$ présentes respectivement dans chaque branche du miroir de courant $M_1$. Le miroir de courant $M_1$ permet donc d'effectuer une amplification en courant du signal $I_c$ entrant dans le transistor $T_B$, pour recopier ce signal amplifié à destination de la résistance $R_S$, connectée en sortie du miroir de courant $M_1$.

Comme on l'a vu, le courant Ie est la somme du courant d'ionisation $I_{ION}$ et du courant $I_R$ circulant dans la résistance d'entré $R_{IN}$. Aussi, afin de mesurer une tension $V_S$ aux bornes de $R_S$ qui soit représentative du seul courant d'ionisation, il est nécessaire de soustraire la composante inutile correspondant au courant circulant dans la résistance d'entrée $R_{IN}$, du signal amplifié obtenu en sortie du miroir de courant $M_1$.

Pour ce faire, le circuit de mesure comprend un second miroir de courant $M_2$, connecté entre la résistance d'entrée $R_{IN}$ du circuit et la masse, et présentant un gain d'amplification $G_m$ identique au premier miroir de courant $M_1$, défini par les valeurs des résistances $R'_A$ et $R'_B$ présentes respectivement dans chaque branche du miroir de courant $M_2$.

La résistance de sortie $R_S$, connectée en sortie des seconds moyens d'amplification $M_2$, est donc traversée par la différence de courant $I_C-I_R$, sensiblement égale au courant d'ionisation $I_{ION,}$ amplifiée du rapport $G_m=R_A/R_B=R'_A/R'_B$. Autrement dit, la résistance de sortie $R_S$ est traversée par une image amplifiée du courant d'ionisation, de sorte à obtenir la tension de sortie $V_S$ à ses bornes suivant la relation :

$$V_S = G_m \times R_S \times I_{ION}$$

Où : $G_m$ est le gain du miroir de courant, $R_S$ est la résistance de sortie, et $I_{ION}$ correspond au courant d'ionisation.

Dans le but d'obtenir un courant d'ionisation important, le circuit doit être polarisé avec une tension continue la plus élevée possible, limitée cependant par les tensions et courants maximaux supportés par les transistors du circuit. Aussi, la tension maximale acceptée par les transistors du circuit de mesure détermine la tension de polarisation du montage. De même, le courant d'entrée doit rester suffisamment faible pour garantir un fonctionnement en mode linéaire. Cette contrainte conditionne le gain appliqué aux miroirs de courant. Ainsi, en cas de court-circuit sur l'entrée (sur les bornes du condensateur de mesure), le courant augmente dans la résistance $R_A$ du miroir de courant $M_1$. Par amplification le courant dans la résistance $R_B$ s'accroît. Pour protéger le circuit, on peut ajouter une diode $D_2$ du collecteur vers la base du second transistor du miroir de courant $M_1$.

On observe en outre que la tension aux bornes du condensateur de mesure est également fonction du type d'étincelle générée. Une étincelle monofilamentaire entre l'électrode de la bougie et un plan de masse entraîne une brusque augmentation du courant circulant dans le condensateur de mesure et, en conséquence, une forte variation de la tension à ses bornes, potentiellement dommageable pour le circuit de mesure. Le circuit de mesure peut donc prévoir une diode de protection $D_1$, permettant de transférer l'excédant d'énergie dans un condensateur tampon $C_T$ et d'assurer que la tension aux bornes du condensateur de mesure n'excède pas la tension de polarisation $V_{POLAR}$.

**Revendications**

1. Dispositif d'allumage radiofréquence d'un moteur à combustion interne, **caractérisé en ce qu'**il comprend :

   - un circuit d'alimentation (2), comprenant un transformateur (T) dont un enroulement secondaire ($L_N$) est connecté à au moins un résonateur (1) présentant une fréquence de résonance supérieure à 1 MHz et comprenant deux électrodes (11, 12) aptes à générer une étincelle pour initier la combustion dans un cylindre du moteur lors d'une commande d'allumage,
   - un condensateur de mesure ($C_{MES}$), connecté en série entre l'enroulement secondaire du transformateur et le résonateur, et
   - un circuit de mesure (10) du courant d'ionisation ($I_{ION}$) des gaz en combustion dans le cylindre, connecté audit condensateur de mesure, ledit circuit de mesure comprenant un générateur de tension à faible impédance d'entrée, apte à fournir une tension de polarisation ($V_{POLAR}$) du condensateur de mesure pour générer le courant d'ionisation, des premiers moyens d'amplification ($M_1$, $R_A$, $R_B$) du courant d'ionisation et des moyens de mesure ($R_S$) d'une tension ($V_S$) représentative du courant d'ionisation amplifié, connectés en sortie des premiers moyens d'amplification.

2. Dispositif selon la revendication 1, **caractérisé en ce que** le condensateur de mesure ($C_{MES}$) est connecté en série entre l'enroulement secondaire du transformateur et le résonateur, au niveau d'un fil de retour à la masse (6) du transformateur et du résonateur.

3. Dispositif selon les revendications 1 ou 2, **caractérisé en ce que** le circuit de mesure comprend un transistor ($T_B$) monté en base commune, dont une première électrode est connectée à une borne du condensateur de mesure et dont une deuxième électrode est connectée à la tension de polarisation ($V_{POLAR}$) par l'intermédiaire des premiers moyens d'amplification.

4. Dispositif selon la revendication 3, **caractérisé en ce que** la première électrode du transistor monté en base commune est connectée en outre à une résistance d'entrée ($R_{IN}$) du circuit de mesure.

5. Dispositif selon la revendication 4, **caractérisé en ce que** les moyens de mesure de la tension représentative du courant d'ionisation amplifié sont connectés en outre à la résistance d'entrée par l'intermédiaire de seconds moyens d'amplification ($M_2$, $R'_A$, $R'_B$), aptes à amplifier le courant circulant dans la résistance d'entrée et présentant un gain d'amplification identique aux premiers moyens d'amplification.

6. Dispositif selon l'une quelconque des revendications précédentes, **caractérisé en ce que** les moyens d'amplification comprennent un miroir de courant.

7. Dispositif selon l'une quelconque des revendications précédentes **caractérisé en ce que** les moyens de mesure de la tension représentative du courant d'ionisation amplifié comprennent une résistance de mesure ($R_S$).

8. Dispositif selon l'une quelconque des revendications précédentes, **caractérisé en ce qu'**un enroulement primaire du transformateur est connecté d'un côté à une tension d'alimentation (Vinter) et de l'autre côté au drain d'au moins un transistor interrupteur (M) commandé par un signal de commande (V1), le transistor interrupteur appliquant la tension d'alimentation aux bornes de l'enroulement primaire à une fréquence définie par le signal de commande.

9. Dispositif selon l'une quelconque des revendications précédentes, **caractérisé en ce que** le transformateur comprend un rapport de transformation variable.

**Patentansprüche**

1. Radiofrequenz-Zündvorrichtung eines Brennkraftmotors, **dadurch gekennzeichnet, dass** sie Folgendes aufweist:

   - eine Versorgungsschaltung (2), die einen Transformator (T) aufweist, wovon eine Sekundärwicklung ($L_N$) an mindestens einen Resonator (1) angeschlossen ist, der eine Resonanzfrequenz von über 1 MHz aufweist, und zwei Elektroden (11, 12) aufweist, die geeignet sind, einen Funken zu erzeugen, um die Verbrennung in einem Zylinder des Motors während eines Zündbefehls auszulösen,
   - einen Messkondensator ($C_{MES}$), der zwischen der Sekundärwicklung des Transformators und dem Resonator in Reihe geschaltet ist, und
   - eine Schaltung zum Messen (10) des Ionisationsstroms ($I_{ION}$) der Verbrennungsgase in dem Zylinder, die an den Messkondensator angeschlossen ist, wobei die Schaltung zum Messen einen Spannungsgenerator mit niedriger Eingangsimpedanz, der geeignet ist, eine Polarisationsspannung ($V_{POLAR}$) des Messkondensators bereitzustellen, um den Ionisationsstrom zu erzeugen, erste Verstärkungsmittel ($M_1$, $R_A$, $R_S$) des Ionisationsstroms und Mittel zum Messen ($R_S$) einer Spannung ($V_S$) aufweist, die für den verstärkten Ionisationsstrom repräsentativ ist, die am Ausgang der ersten Verstärkungsmittel angeschlossen sind.

2. Vorrichtung nach Anspruch 1, **dadurch gekennzeichnet, dass** der Messkondensator ($C_{MES}$) zwischen der Sekundärwicklung des Transformators und dem Resonator an einem Masserückleiter (6) des Transformators und des Resonators in Reihe geschaltet ist.

3. Vorrichtung nach einem der Ansprüche 1 oder 2, **dadurch gekennzeichnet, dass** die Schaltung zum Messen einen als Basisschaltung betriebenen Transistor ($T_B$) aufweist, wovon eine erste Elektrode an eine Klemme des Messkondensators angeschlossen ist und wovon eine zweite Elektrode über die ersten Verstärkungsmittel an die Polarisationsspannung ($V_{POLAR}$) angeschlossen ist.

4. Vorrichtung nach Anspruch 3, **dadurch gekennzeichnet, dass** die erste Elektrode des als Basisschaltung betriebenen Transistors ferner an einen Eingangswiderstand ($R_{IN}$) der Schaltung zum Messen angeschlossen ist.

5. Vorrichtung nach Anspruch 4, **dadurch gekennzeichnet, dass** die Mittel zum Messen der Spannung, die für den verstärkten Ionisationsstrom repräsentativ ist, ferner über zweite Verstärkungsmittel ($M_2$, R'A, R'B) an den Eingangswiderstand angeschlossen sind, die geeignet sind, den Strom zu verstärken, der in dem Eingangswiderstand fließt, und einen Verstärkungsgewinn aufweisen, der mit den ersten Verstärkungsmitteln identisch ist.

6. Vorrichtung nach einem der vorhergehenden Ansprüche, **dadurch gekennzeichnet, dass** die Verstärkungsmittel einen Stromspiegel aufweisen.

7. Vorrichtung nach einem der vorhergehenden Ansprüche, **dadurch gekennzeichnet, dass** die Mittel zum Messen der Spannung, die für den verstärkten Ionisationsstrom repräsentativ ist, einen Messwiderstand ($R_S$) aufweisen.

8. Vorrichtung nach einem der vorhergehenden Ansprüche, **dadurch gekennzeichnet, dass** eine Primärwicklung des Transformators einerseits an eine Versorgungsspannung (Vinter) und andererseits an den Drain von mindestens einem Schalttransistor (M), der von einem Steuersignal (V1) gesteuert wird, angeschlossen ist, wobei der Schalttransistor die Versorgungsspannung an die Klemmen der Primärwicklung mit einer Frequenz, die durch das Steuersignal definiert ist, anlegt.

9. Vorrichtung nach einem der vorhergehenden Ansprüche, **dadurch gekennzeichnet, dass** der Transformator ein variables Übersetzungsverhältnis aufweist.

**Claims**

1. Radio frequency ignition device for an internal combustion engine, **characterized in that** it comprises:

   - a power supply circuit (2), comprising a transformer (T) a secondary winding ($L_N$) of which is connected to at least one resonator (1) having a resonance frequency greater than 1 MHz and comprising two electrodes (11, 12) which are able to generate a spark to initiate combustion in a cylinder of the engine upon an ignition command,

   - a measurement capacitor ($C_{MES}$), connected in series between the secondary winding of the transformer and the resonator, and
   - a circuit (10) for measuring the ionization current ($I_{ION}$) of the combustion gases in the cylinder, connected to said measurement capacitor, said measurement circuit comprising a voltage generator with low input impedance, able to supply a polarization voltage ($V_{POLAR}$) for the measurement capacitor to generate the ionization current, first means ($M_1$, $R_A$, $R_B$) of amplifying the ionization current and means ($R_S$) of measuring a voltage ($V_S$) representative of the amplified ionization current, which are connected to the output of the first amplification means.

2. Device according to Claim 1, **characterized in that** the measurement capacitor ($C_{MES}$) is connected in series between the secondary winding of the transformer and the resonator, at the level of a ground return wire (6) of the transformer and of the resonator.

3. Device according to Claim 1 or 2, **characterized in that** the measurement circuit comprises a transistor ($T_B$) mounted in common base configuration, a first electrode of which is connected to a terminal of the measurement capacitor and a second electrode of which is connected to the polarization voltage ($V_{POLAR}$) via the first amplification means.

4. Device according to Claim 3, **characterized in that** the first electrode of the transistor mounted in common base configuration is also connected to an input resistor ($R_{IN}$) of the measurement circuit.

5. Device according to Claim 4, **characterized in that** the means of measuring the voltage representative of the amplified ionization current are also connected to the input resistor via second amplification means ($M_2$, $R'_A$, $R'_B$), which are able to amplify the current circulating in the input resistor and having an amplification gain identical to the first amplification means.

6. Device according to any one of the preceding claims, **characterized in that** the amplification means comprise a current mirror.

7. Device according to any one of the preceding claims, **characterized in that** the means of measuring the voltage representative of the amplified ionization current comprise a measurement resistor ($R_S$).

8. Device according to any one of the preceding claims, **characterized in that** a primary winding of the transformer is connected on one side to a power supply voltage (Vinter) and on the other side to the drain of at least one switching transistor (M) controlled by a control signal (V1), the switching transistor applying the power supply voltage to the terminals of the primary winding at a frequency defined by the control signal.

9. Device according to any one of the preceding claims, **characterized in that** the transformer has a variable turns ratio.

**FIG. 1**

FIG.2

FiG.3

FIG. 4

FIG. 5

10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0310766
- FR 0310767
- FR 0310768